# EUROPEAN PATENT APPLICATION

(11) **EP 3 150 947 A1**
(43) Date of publication of application: **05.04.2017**
(21) Application number: 15187410.4
(22) Date of filing: 29.09.2015
(51) Int. Cl.: F25D 5/02

(54) **COOLING STICK, SELF-COOLING VESSEL, AND PROCESS OF MANUFACTURE**

(71) Applicant: Passehl, Rüdiger, 71065 Sindelfingen (DE)
(72) Inventor: Passehl, Rüdiger, 71065 Sindelfingen (DE)
(74) Representative: Meyer zu Bexten, Elmar

(57) **Abstract**

Problem

In a known cooling stick, it is necessary that the inner bag be ruptured by pressure of the fingers, or by squeezing the outer bag and thus causing pressure on the inner bag. Furthermore, in these and other flexible bi-chambered systems, only such salts may be employed that do not tend to commence inadvertent reaction during storage, which greatly restricts the selection of possible coolants.

Solution

The problem is solved by a cooling stick (7) comprising water (1) and an enclosing thin-walled pouch (2) forming a water pouch (3), salt (4) embedding the water pouch (3) for absorbing and cooling the water (1), a salt container (5) holding the salt (4) and the water pouch (3), and a flexible, inwardly spiked (15) cooling stick lid (6) sealing the salt container (5).

## Description

### Technical Field

The invention pertains to the field of drinkware and tableware such as beakers, cups, jars, mugs, or tumblers.

### Background Art

US 3023587 A (KWIK KOLD OF AMERICA INC) 06.03.1962 discloses a chemical cooling stick for beverages comprising an outer envelope, all the edges of said envelope being hermetically sealed to prevent escape of any material therefrom, said outer envelope being formed of a thin flexible plastic sheet material, a bag within said outer envelope, said bag being substantially the same diameter as the outer envelope and of lesser length than the outer envelope and positioned at the upper end of said outer envelope, said bag being formed of a thin flexible plastic sheet material, said outer envelope containing a dry freezing chemical mixture, said bag containing a hydrous substance, the hydrous substance filtering down through the dry freezing chemical mixture after rupture of said bag, a stirring stick, and means securing one edge of the outer envelope to said stirring stick.

Beyond the field of beverage receptacles, so-called instant cold packs are sometimes used as a convenient replacement for crushed ice. Such packs consist of two bags: an inner bag containing water, and an outer bag containing ammonium nitrate, calcium ammonium nitrate, or urea. When the inner bag of water is broken by squeezing the package, it is allowed to dissolve the solid in an endothermic reaction. Such reaction - as elucidated, inter alia, **in** ANSLYN, Eric V., et al. Modern Physical Organic Chemistry. London: Macmillan Education, 2005. ISBN 1891389319. - absorbs heat from the surroundings, quickly lowering the pack's temperature.

### Summary of invention

The invention provides an improved cooling stick, self-cooling vessel, and process specially adapted for the manufacture of a cooling stick.

### Technical Problem

In the cooling stick according to US 3023587 A (KWIK KOLD OF AMERICA INC) 06.03.1962 , it is necessary that the inner bag be ruptured by pressure of the fingers or by squeezing the outer bag and thus causing pressure on the inner bag. Furthermore, in these and other flexible bi-chambered systems, only such salts may be employed that do not tend to commence inadvertent reaction during storage, which greatly restricts the selection of possible coolants.

### Solution to Problem

This problem is solved by the teachings of the present invention.

### Advantageous effect of invention

The cooling stick of Claim 1 may be easily activated by a single digit. For instance, a user, holding the stick in one hand, may depress its lid using her thumb, thus puncturing the water pouch and releasing the liquid contained therein into the embedding salt.

The cooling stick of Claim 2 meets concerns of public health and safety that limit the salt's nitrogen content in the presence of ammonium nitrate. Within the pertinent bounds imposed by national rules and regulations, the combination of ammonium nitrate and sodium thiosulfate pentahydrate - owing to the solution enthalpy and mass density of its ingredients - ensures maximum refrigerating capacity at minimum volume, thus allowing for a mixture of utmost efficiency.

The cooling stick of Claim 3 is based on the insight that ammonium nitrate and sodium thiosulfate pentahydrate possess the adverse property of chemically responding to the mere presence of air moisture. Isolating these substances in separate layers thus precludes these components from inter-reacting prematurely.

Within the cooling stick of Claim 4, potassium chloride serves as an additional sink of thermal energy for cooling. Furthermore, the potassium chloride tends to clump together and indurate when exposed to residual damp. In its hardened state, the intermediate layer thus formed advantageously decelerates the passage of water from sodium thiosulfate pentahydrate to ammonium nitrate.

The cooling stick of Claim 5 reflects the respective dissolution and reaction rates inherent to the two basic ingredients of its salt mixture. Specifically, ammonium nitrate exhibits a rapid inter-reaction with water compared to sodium thiosulfate pentahydrate. As a consequence, the claimed arrangement allows for the latter substance to hydrate first. This way, a maximum of salt may be dissolved by the water while it is still at its original temperature. The pre-cooled water then passes on to the ammonium nitrate, which in turn boosts the ongoing reaction, enhancing the overall coolant effect.

In an effort to prevent creasing, the water pouch of the cooling stick according to Claim 6 is not filled to its maximum capacity, but inflated only partially, allowing it to fit the encompassing walls of the salt container snugly and tightly.

This measure is reinforced with the cooling stick of Claim 7, whose water pouch may be pressed onto the salt without prior alignment while avoiding any unnecessary welding seams due to the pouch's spherical shape.

In the self-cooling cup of Claim 9, a drinking cup lid is attached unilaterally to the cooling stick to lock it into position while the cup is being shaken for mixing the cooling ingredients or tilted in an attempt to consume its contents. Also, this embodiment provides for a homogeneous mass density of the enclosed fluid, thus enabling an optimal transfer of energy.

The crossed slot of a cup according to Claim 12 doubles as a lead-in for drinking cup straws and pressure compensating valve to prevent a possible vacuum from building up inside the vessel while its contents are being consumed.

The cup of Claim 13, due to the bellow shape of its lid, allows a consumer of the contained beverage to trigger the cooling process hygienically by indentation of the cooling cup's lid rather than having to dismantle its integrated cooling stick. To this end, any pressure exerted on the drinking cup lid may be passed on laterally to the cooling stick by an elastic or plastic transformation of the former.

In the cup of Claim 14, the absence of Bisphenol A (BPA) - a man-made carbon-based synthetic compound used in the manufacture of certain plastics - avoids the detrimental health effects and environmental issues associated with such ingredient.

The process of Claim 15 provides for a tight and compact package within the salt container, securing the layers of solids beneath the deformed water pouch and further mitigating the risk of premature inter-reaction.

As a result, when leaving its activated cooling stick submerged rather than removing it upon activation, a self-cooling cup according to the invention may serve to maintain its contents frigid for up to one hour, depending on ambient temperature.

### Brief description of drawings

Figure 1 is a longitudinal section of a cooling stick.
Figure 2 is a longitudinal section of a self-cooling cup.

### Description of embodiments

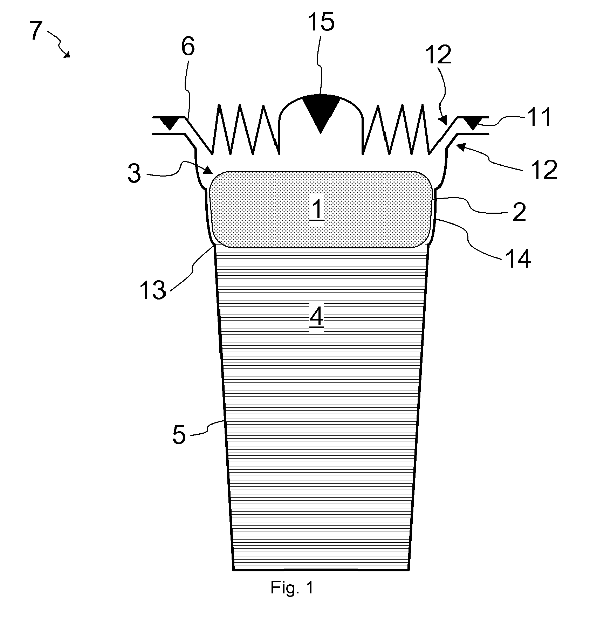

Figure 1 illustrates a cooling stick (7) according to a first embodiment of the invention. At its center, the cooling stick (7) contains an originally spherical, incompletely filled water pouch (3) that has been elastically deformed and pressed undirected into a bedding of salt (4). Not specifically depicted but referring to the drawing's portrait orientation, said salt (4) is constituted by a bottom layer of ammonium nitrate, an intermediate buffer of potassium chloride, and a top layer of sodium thiosulfate pentahydrate. Potassium nitrate, sodium nitrate, and ammonium dihydrogen phosphate may be added as an additional cooling agent, anti-caking agent, flow aid, or flame retardant.

A surrounding conical salt container (5) holds both the salt (4) and embedded water pouch (3) and is sealed by a circular cooling stick lid (6) of bellowed shape. When depressed, the cooling stick lid (6) will flex inwardly, its central spike (15) puncturing the thin-walled water pouch (3). As is readily apparent, alternative means of penetrating the water pouch (3) may be provided, such as peel seams provided in the pouch (2) itself. Once freed from its enclosing pouch (2), the water (1) - outpouring into the salt container (5) - may be absorbed and cooled by the embedding salt (4).

Depicted near the top left corner of the drawing, a so-called energy director (11) is formed in the cooling stick lid (6). Owing to its V-shaped profile, this circumferential ring serves to weld the cooling stick lid (6) securely to the salt container (5). Near the top right corner, an outmost indentation of the cooling stick lid (6) forms a bearing surface (12) to retain the cooling stick lid (6) in its proper position for welding. Slightly below, an upper protrusion of the salt container (5) serves as a stacking aid, preventing suction from building between adjacent salt containers in the same stack.

A dome (14) shaped by the container's middle section is adapted to form-fit the compressed water pouch (3). This geometry avoids any undesired air entrapment as might occur between the water pouch (3) and a conventional, purely conical salt container (5). By impressing the water pouch (3) during manufacture, any remaining gas - along with the accompanying moisture - tends to be expelled from the salt container (5). When the cooling stick lid (6) is subsequently attached, the concentric creases formed by its bellows fasten the water pouch (3) securely in place. Even then, the spike (15) is recessed sufficiently to avoid premature disintegration of the water pouch (3).

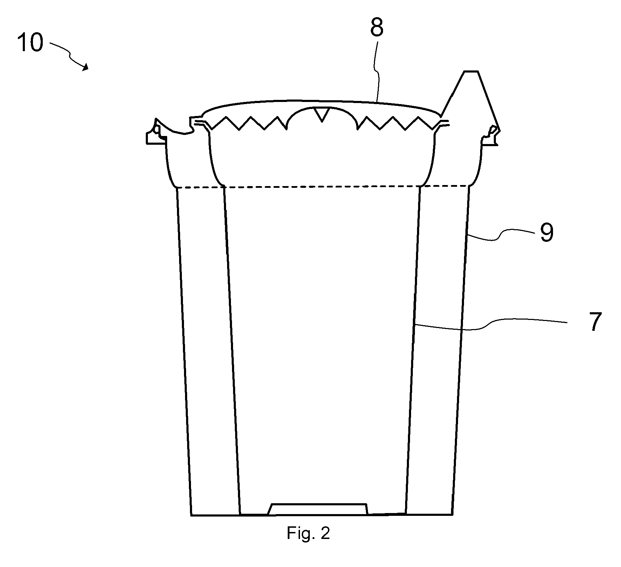

Figure 2 elucidates a self-cooling vessel according to a second embodiment of the invention. It is well understood that such vessel may serve, for instance, as a carafe, glassware, or bucket. The present embodiment however takes the form of a self-cooling cup (10) essentially consisting of a stackable single- or multi-use drinking cup (9) of BPA-free polypropylene or polyethylene, complementary drinking cup lid (8), and cooling stick (7) as described above.

Herein, the drinking cup lid (8) is attached unilaterally to an abutting surface of the cooling stick (7), topping the drinking cup (9) such that the cooling stick (7) protrudes coaxially - in the drawing, upright from top to bottom - into the drinking cup (9). As seems readily apparent, similar measures may be applied to a thermally insulated reusable cup.

Not specifically depicted, a crossed slot is incised in the bellow-shaped drinking cup lid (8) for venting the drinking cup (9) and inserting a drinking straw. Diametrically opposite the crossed slot, a nozzle may be formed to facilitate beverage consumption straight from the cup.

### Industrial applicability

The invention may be applied, inter alia, throughout the consumer goods, beverage, and packaging industries.

### Reference signs list

Similar reference characters denote corresponding features consistently throughout the attached drawings.
- 1: Water
- 2: Pouch
- 3: Water pouch
- 4: Salt
- 5: Salt container
- 6: Cooling stick lid
- 7: Cooling stick
- 8: Drinking cup lid
- 9: Drinking cup
- 10: Self-cooling cup
- 11: Energy director
- 12: Bearing surface
- 13: Salt filling elevation
- 14: Dome
- 15: Spike

### Citation list

The following literature is cited throughout this document.

### Patent literature

US 3023587 A (KWIK KOLD OF AMERICA INC) 06.03.1962

### Non-patent literature

ANSLYN, Eric V., et al. Modern Physical Organic Chemistry. London: Macmillan Education, 2005. ISBN 1891389319.

## Claims

1. Cooling stick (7),
comprising
water (1) and an enclosing thin-walled pouch (2) forming a water pouch (3), salt (4) for absorbing and cooling the water (1), and
a salt container (5) holding the salt (4) and the water pouch (3), **characterized in**
a flexible, inwardly spiked (15) cooling stick lid (6) sealing the salt container (5),
wherein the water pouch (3) is embedded in the salt (4).

2. Cooling stick (7) according to Claim 1,
**characterized in that**
the salt (4) comprises an ammonium nitrate and a sodium thiosulfate pentahydrate.

3. Cooling stick (7) according to Claim 2,
**characterized in that**
the ammonium nitrate and the sodium thiosulfate pentahydrate are layered within the salt container (5).

4. Cooling stick (7) according to Claim 3,
**characterized in that**
the salt (4) further comprises a potassium chloride layered betwixt the ammonium nitrate and the sodium thiosulfate pentahydrate.

5. Cooling stick (7) according to Claim 4,
**characterized in that**,
relative to the potassium chloride, the water pouch (3) is arranged beyond the sodium thiosulfate pentahydrate.

6. Cooling stick (7) according to any of the preceding claims,
**characterized in that**
the water pouch (3) is elastic and partially filled.

7. Cooling stick (7) according to Claim 6,
**characterized in that**
the water pouch (3) is essentially spherical,
the salt container (5) is essentially conical, and
the cooling stick lid (6) is essentially circular.

8. Self-cooling vessel preferably taking the form of a cup, carafe, glassware, or bucket,
**characterized in**
a preferably replaceable cooling stick (7) according to any of the preceding claims.

9. Self-cooling cup (10) according to Claim 8,
**characterized in**
a drinking cup lid (8) attached unilaterally to the cooling stick (7) and
a drinking cup (9) topped by the drinking cup lid (8) such that the cooling stick (7) protrudes coaxially into the drinking cup (9).

10. Self-cooling cup (10) according to Claim 9,
**characterized in that**
the drinking cup (9) is reusable and preferably thermally insulated.

11. Self-cooling cup (10) according to Claim 9,
**characterized in that**
the drinking cup (9) is a preferably stackable single-use cup.

12. Self-cooling cup (10) according to any of Claim 9 to Claim 11,
**characterized in that**
a crossed slot is formed in the drinking cup lid (8) for venting the drinking cup (9) and inserting a drinking straw.

13. Self-cooling cup (10) according to any of Claim 9 to Claim 12,
**characterized in that**
the drinking cup lid (8) is partially super-elevated.

14. Self-cooling cup (10) according to any of Claim 9 to Claim 13,
**characterized in that**
the drinking cup (9) is formed of a thermoplastic polymer, preferably BPA-free polypropylene or polyethylene.

15. Process specially adapted for the manufacture of a cooling stick (7) according to Claim 7,
**characterized in**
filling the ammonium nitrate into the salt container (5),
layering the potassium chloride atop the ammonium nitrate,
layering the sodium thiosulfate pentahydrate atop the potassium chloride, forming the water pouch (3) by inflating the pouch (2) with the water (1), pressing the water pouch (3) onto the sodium thiosulfate pentahydrate, and sealing the salt container (5) with the cooling stick lid (6) such that the cooling stick lid (6) is spiked (15) inward relative to the cooling stick (7).
